# EUROPÄISCHE PATENTSCHRIFT

(11) **EP 2 236 586 B1**
(45) Veröffentlichungstag und Bekanntmachung des Hinweises auf die Patenterteilung: **16.07.2014**
(21) Anmeldenummer: 09015234.9
(22) Anmeldetag: 09.12.2009
(51) Int. Cl.: C10L 3/10, B09B 1/00, B01D 53/14, B01D 53/86, B01D 53/62, B01D 53/78, C01D 7/00, C01D 7/02

(54) **Verfahren zur Bindung von Kohlendioxid CO2**
Method for binding carbon dioxide CO2
Procédé de liaison de dioxide de carbone CO2

(30) Priorität: 01.04.2009 EP 09004821
(43) Veröffentlichungstag der Anmeldung: 06.10.2010
(73) Patentinhaber: R3PC DI Roman Reder, 4060 Leonding (AT)
(72) Erfinder: Reder, Roman, 4060 Leonding (AT); Hundeshagen, Arthur, 4073 Wilhering (AT)
(74) Vertreter: Landgraf, Elvira

(56) Entgegenhaltungen:
- EP-A- 0 628 339
- EP-A- 0 726 229
- EP-A- 2 040 323
- WO-A-2004/037718
- WO-A-2007/139392
- DE-A1-102005 045 055
- GB-A- 2 089 334
- US-A- 1 537 479
- US-A- 3 792 153
- US-A- 5 449 506

## Beschreibung

Die Erfindung bezieht sich auf ein Verfahren zur Bindung von Kohlendioxid CO₂ aus technischen Quellen in Form von Natriumhydrogencarbonat, wobei die Umsetzung nach dem Solvey-Prozess abläuft und das aus dem Natriumchlorid, stammenden Chlorions in Chlorgas bzw. in Vinylchlorid und in weiterer Folge zu Polyvinychlorid (PVC) umgesetzt wird.

Kohlendioxid ist ein unter Normalbedingungen farb- und geruchloses Gas, das natürlich in der Atmosphäre anwesend ist. Durch die Industrialisierung ist der Anteil an Kohlendioxid in der Atmosphäre stark angestiegen. Da Kohlendioxid ein Infrarotabsorber ist trägt diese Substanz erheblich zum Treibhauseffekt bei. Besonders viel Kohlendioxid entsteht bei der Verbrennung fossiler Brennstoffe und durch das Brennen von Kalkstein. So gibt es gegenwärtig ein großes Interesse das Kohlendioxid aus industriellen Prozessen aufzufangen und sicher zu lagern.
So lagert z.B. die Fa. Vattenfall das aus der Verbrennung im Kraftwerk anfallende Kohlendioxid unterirdisch bei hohem Druck (ca. 300 bar) in alten Salz- und Erdgaslagerstätten ein. Bei dieser Form der Endlagerung von Kohlendioxid besteht aber die Möglichkeit, dass durch die im Laufe der Zeit entstehende Undichtigkeiten Kohlendioxid in sehr kurzer Zeit mit hoher Geschwindigkeit entweicht und entsprechende Probleme verursacht. Auch andere Verfahren existieren um das anthropogene Kohlendioxid aufzufangen und der steigenden Konzentration in der Atmosphäre entgegenzuwirken. Die Druckschrift US-A-5 245118 und EP 0745004 B1 beschreiben ein Verfahren, in dem Kohlendioxid in der Tiefsee bzw. im Tiefseesediment deponiert wird. Andere Verfahren, wie sie z.B. in J.C. Orr, Natur, Vol. 357, 283-284 (1992) N. Nakicenovic & A. John, Energy, Vol. 16, Nr. 11/12, 1347-1377 (1991), H.J.W. DeBaar, Energy Convers. Mgmt. , Vol. 33, Nr. 5-8, 627-633 (1992) DE 69506381 T2 (Verfahren und Träger zur Reduktion des atmosphärischen Kohlendioxids) beschrieben werden, haben gemeinsam, dass das Kohlendioxid nicht in einer langfristig sicheren festen Form gebunden wird und/oder das die Fixierung des Kohlendioxids sehr energieaufwändig ist. Auch wurden Verfahren vorgeschlagen, welches das Kohlendioxid im Weltall entsorgen. Hier stellt sich die Frage nach den Kosten bzw. der Energiebilanz dieser Entsorgungsarten. Die Speicherung von Kohlendioxid in Form von Biomasse wird in der Patentschrift DE 10 2004028356 B4 beschrieben. Als Energielieferant dient hier das Sonnenlicht, wobei das Verfahren bei sehr großen Mengen an Kohlendioxid, welche z.B. bei der Verbrennung von Kohle in einem Kohlekraftwerk entstehen, sicher überfordert ist.

Der Erfindung liegt die Aufgabe zugrunde industriell entstehendes Kohlendioxid in einer stabilen und ungiftigen Form zu speichern.

Natriumhydrogencarbonat NaHCO₃ ist eine ungiftige Substanz, welche eine Dichte von 2,22 g/ml besitzt. Die Löslichkeit in Wasser ist gering und beträgt 96 g/Liter bei 20°C. Die Molmasse beträgt 84,01 g/mol, die von Kohlendioxid 44,01 g/mol. Damit sind in Natriumhydrogencarbonat 52,4% Kohlendioxid chemisch gebunden gespeichert (1 mol Natriumhydrogencarbonat enthält 1 mol Kohlendioxid). Die daraus resultierende Dichte des gespeicherten Kohlendioxids beträgt 1,163 g/ml (2,22 g/ml * 52,4%). Diese liegt somit wesentlich höher als das unter Druck stehende flüssige Kohlendioxid welches bei 31°C (angenommene Temperatur in einer Lagerstädte) eine Dichte von 0,464 g/ml und auch bei Kühlung auf -37°C eine Dichte von 1,101 g/ml aufweist. Erst durch Kühlung auf -79°C besitzt Kohlendioxid eine Dichte von 1,560 g/ml, welche höher ist als die Dichte des Kohlendioxids im Natriumhydrogencarbonat. In der Patenschrift EP-A-0 628 339 wird eine Möglichkeit zur Reinigung eines kohlendioxidhaltigen Gases beschrieben, in der das Kohlendioxid unter anderem in Form von Natriumhydriogencarbonat abgetrennt wird. Diese Patentschrift und auch andere Schriften, wie z.B.: die Patentschrift EP 040 323 A2, gehen aber nicht darauf ein, wie die für die beschriebene chemische Umsetzung benötigte Natriumhydroxidlösung hergestellt wird. Natriumhydroxid wird nahezu ausschließlich durch Elektrolyse einer wässrigen Natriumchloridlösung gewonnen. Bei diesem Prozess werden große Mengen an elektrischer Energie verbraucht, welche z.B. durch Verbrennen von fossilen Brennstoffen in Kraftwerken erzeugt werden. Da für die Bereitstellung der für die Elektrolyse benötigten elektrischen Energie wesentlich größere Mengen an Kohlendioxid freigesetzt werden, als anschließend wieder als Natriumhydrogencarbonat gespeichert werden können, wird das Problem der Kohlendioxidemission nicht gelöst. Andere Verfahren zur Herstellung von Natronlauge sind ebenfalls sehr energieintensiv, setzen damit große Mengen an Kohlendioxid frei und sind somit für die gegebene Aufgabenstellung nicht zielführend. Das beschriebene Verfahren ist somit nur zur Reinigung von Gasen geeignet (Problemstellung der Patenschrift EP 0 628 339 A1) und nicht zur "Entfernung" (Beseitigung) größerer Mengen Kohlendioxid z.B. aus Abgasen der Großkraftwerke oder der Kalkbrennereien. Auch ist die Absorption von Kohlendioxid allgemein in Laugen bzw. in Basen bekannt aber nicht zielführend zur Absorption von Kohlendioxid aus Großtechnischen quellen, da die Laugen bzw. Basen erst energieintensiv wiederum unter Freisetzung von Kohlendioxid erzeugt werden müssen, wobei die Menge des freigestetzten Kohlendioxides aus energetischen Gründen immer die Menge des zu absorbierenden Gases (CO₂) übersteigt.

Natriumhydrogencarbonat wird heutzutage großtechnisch in sehr großen Mengen nach dem Solvay-Verfahren gewonnen. Das bei der Herstellung benötigte Kohlendioxid wird dabei durch Brennen von Kalkstein CaCO₃ hergestellt. Das beim Brennen des Kalkes zusätzlich zum Kohlendioxid entstehende Calciumoxid (Branntkalk, CaO) wird verwendet um den Ammoniak, welches als Ammoniumchlorid bei der Darstellung von Natriumhydrogencarbonat vorliegt in einem Folgeschritt wieder in die Ausgangsverbindung Ammoniak zu überführen. Als Koppelprodukt bei diesem Prozess entsteht daher nahezu wertloses Calciumchlorid, welches nicht in großen Maßstab weiterverwendet werden kann und zum größten Teil entsorgt werden muss. Ein weiterentwickeltes Solvay-Verfahren, dass die unerwünschte Herstellung des Calciumchlorids vermeidet, ist das sogenannte Amminverfahren, welches aber verschiedene, bedingt durch die Verwendung von hochmolekularen nicht wasserlöslichen Aminen und organischen Lösungsmittel, technische Schwierigkeiten bereitet. So ist die Wiederverwendung der Lösungsmittel nur durch rektifizierende Destillation möglich.

Die Erfindung beruht darauf, das ein industriell erzeugtes anthropogenes Kohlendioxid mittels im Kreis geführter Magnesiumsalze zum Natriumhydrogencarbonat umgewandelt wird. Als Natriumquelle dient dabei Natriumchlorid. Das so produzierte Natriumhydrogencarbonat kann dabei gefahrlos in leeren Steinsalzlagern gelagert werden oder aber auch technisch weiterverarbeitet werden. Hier ist sicher der sehr große Bedarf an Soda (Natriumcarbonat) der Glas- und Seifenindustrie, welches leicht aus Natriumhydrogencarbonat hergestellt werden kann, zu berücksichtigen. Gegenstand der Erfindung ist daher ein Verfahren zur Speicherung von anthropogenem Kohlendioxid, dadurch gekennzeichnet, dass Kohlendioxid als Natriumhydrogencarbonat gespeichert wird, dass als Natriumquelle Natriumchlorid verwendet wird, und nach folgenden Reaktionsgleichungen umgesetzt wird

NH₄(HCO₃) + NaCl → NH₄Cl + NaHCO₃

2 NH₄Cl + Mg(OH)₂ → 2 NH₃ + MgCl₂ + 2 H₂O,

dass das entstehende Magnesiumchlorid thermisch zersetzt wird und dass das Chloridion aus dem so erhaltenen Magnesiumchlorid als Chlorkomponente in Chlorgas bzw. in Vinylchlorid umgesetzt wird.

Als Beispiel werden nun erfindungsgemäß einige mögliche Verfahren zur Gewinnung von Natriumhydrogencarbonat aus Natriumchlorid und Kohlendioxid vorgestellt. Es existieren viele verschiedene technische Varianten zur Herstellung von Natriumhydrogencarbonat welche sich teilweise nur in der technischen Realisierung unterscheiden. In der Literatur (Gmelin: Handbuch der anorganischen Chemie, Natrium, 8 Auflage, System Nr. 21, S. 267ff, 1964 Verlag Chemie GmbH Weinheim/ Bergstrasse) werden verschiedene Verfahren zur Synthese von Natriumhydrogencarbonat vorgestellt, welche Natriumchlorid als Natriumquelle beziehen. Dabei wird das wertvolle Chloridion allerdings als wertloses Calciumchlorid verworfen. Es werden auch verschiedene Verfahren besprochen, welche die Synthese des Natriumhydrogencarbonates über Magnesiumverbindungen beschreiben. Dies wird auch in der Patentschrift EP 2 040 323 A2 beschrieben. Bei dieser Patentschrift wird allerdings das entstehende Magnesiumchlorid als Speichersalz für Ammoniak verwendet um es nicht entsorgen zu müssen. Allerdings sind die benötigten Mengen an Ammoniakspeichersalz sicher nicht ausreichend, um das weltweite Kohlendioxid Problem (Treibhauseffekt) zu lösen. In der Patentschrift EP 0726 229 A1 in der nicht Ammoniak sondern organische Amine verwendet werden, wird das Calcium- bzw. Magnesiumchlorid wie beim ursprünglichen Solvay-Verfahren als Abfallprodukt angesehen. Auch in der Patentschrift WO 2007/139392, in der ein modifizierter Solvay-Prozeß beschrieben wird, wird unter anderem die Möglichkeit aufgezeigt Kohlendioxid mit Hilfe von Calciumoxid (CaO) bzw. Magnesiumoxid (MgO) aus Gasen abzutrennen.
Nun muss aber die benötigte Calcium- bzw. Magnesiumoxid- Lösung wiederum erst durch Brennen von Calciumcarbonat bzw. Magnesiumcarbonat unter gleichzeitiger Freisetzung von Kohlendioxid hergestellt werden. Bei diesem Prozess wird also mindestens vorher die gleiche Menge an Kohlendioxid freigesetzt, welche anschließend wieder aufgenommen werden kann (siehe Oben). Dies Verfahren eignet sich also wiederum nur zur Reinigung kleinerer Gasmengen. Auch in dem United States Patent Nummer 1,537,479 wird die Umsetzung von Calciumchlorid mit Magnesiumoxid und Kohlendioxid zu Calciumcarbonat und Magnesiumchlorid beschrieben. Auch hier wird das Magnesiumchlorid nicht weiter verwendet bzw. muss das Magnesiumoxid erst durch brennen des Magnesiumcarbonates unter Freisetzung von Kohlendioxid hergestellt werden.
In der Offenlegungsschrift DE 10 2005 045 055 A1 wird ein Herstellungsverfahren beschrieben, in der Kaliumsulfat aus Kaliumchlorid hergestellt wird ohne das Salzsäuregas freigesetzt wird. Auch hier wird Magnesiumchlorid als Abfallprodukt angesehen. Im United States Patent Nummer 5,449,506 wird ein Verfahren beschrieben, in dem Kaliumcarbonat hergestellt wird. Auch bei diesem Patent fällt eine Calciumchloridlösung als Abfallprodukt an. In dem United States Patent Nummer 1,537,479 wird die Umsetzung von Calciumchlorid mit Magnesiumoxid und Kohlendioxid zu Calciumcarbonat und Magnesiumchlorid beschrieben. Auch hier wird das Magnesiumchlorid nicht weiter verwendet.

Das unter anderem bei den verschiedenen beschriebenen Umsetzungen entstehende Magnesiumchlorid wird aber nie thermisch zersetzt, sondern immer mit Calciumoxid bzw. Calciumhydroxid zum Magnesiumhydroxid, welches wieder eingesetzt werden kann, und zum wertlosen Calciumchlorid umgesetzt. So ist auch die Umsetzung des Magnesiumchlorides mit Natronlauge aus energetischen Gründen (siehe oben) nicht sinnvoll um das CO₂-Problem zu lösen.

Eine Ausführungsform der Erfindung basiert demgegenüber darauf, das das Chloridion als Salzsäuregas thermisch freigesetzt wird. So kann das beim Solvay-Prozess als Zwischenprodukt anfallende Ammoniumchlorid nicht nur wie technisch üblich mit Calciumoxid bzw. Calciumhydroxid zum Ammoniak und zum Calciumchlorid umgesetzt werden, sondern das Ammoniumchlorid thermisch z.B. mittels Membranen bei hohen Temperaturen in Salzsäuregas und Ammoniak getrennt werden. Sinnvollerweise verwendet man aber zur Zersetzung des Ammoniumchlorids Magnesiumoxid bzw. Magnesiumhydroxid. Das entstehende Ammoniak kann wieder wie beschrieben zurückgeführt werden. Das zusätzlich entstehende Magnesiumchlorid kann dann leicht thermisch in Magnesiumhydroxid bzw. Magnesiumoxid und Salzsäuregas gespalten werden (Gmelin: Handbuch der anorganischen Chemie, 8 Auflage, Magnesium Teil B, System Nr. 27, S. 103ff, 1939, Berlin Verlag Chemie GmbH; Gmelin: Handbuch der anorganischen Chemie, 8 Auflage, Chlor, Ergänzungsband Teil A, System Nr. 6, S. 38ff, 1968, Verlag Chemie GmbH Weinheim/ Bergstrasse). Diese thermische Spaltung in Metallhydroxid bzw. Metalloxid gelingt beim Calciumchlorid nicht bzw. nur unter sehr drastischen (z.B. hohe Temperatur) Bedingungen.

Das so gewonnene Salzsäuregas kann dann oxidativ in Chlor wie unter anderem in der Patentschrift WO 2004/037718 A2 beschrieben, bzw. in einer Oxichlorierung von z.B. Ethen mit Sauerstoff zu Vinylchlorid umgesetzt werden, welches dann anschließend zu Polyvinylchlorid (PVC) umgesetzt werden kann. Hier sollen aber nur zwei mögliche Verfahren zur Herstellung des Natriumhydrogencarbonates bzw. das für die weitere Verwendung erforderliche Magnesiumchlorid vorgestellt werden.

Das Kohlendioxid wird wie beim Solvayverfahren in einer wässrigen ammoniakalischen (oder einer anderen chemischen Verbindung welche ein in Wasser leicht lösliches Hydrogencarbonat bildet, z.B. verschiedene Amine) Lösung, welche mit Natriumchlorid gesättigt ist, eingeleitet, wobei die Reihenfolge der Zugabe der einzelnen Komponenten den technischen Erfordernissen angepasst werden kann. Das dabei entstehende Natriumhydrogencarbonat kann wie oben beschrieben z.B. durch Filtration, Sedimentation oder einer anderen dem Fachmann bekannten Trennverfahren abgetrennt werden. Anders als bei Solvayverfahren wird allerdings anschließend der Ammoniak oder die andere geeignete wasserlösliche Verbindung (s.O.) nicht mit Calciumoxid bzw. Calciumhydroxid ausgetrieben sondern mittels Magnesiumhydroxid bzw. Magnesiumoxid MgO in Freiheit gesetzt. Insgesamt erfolgen die Reaktionen der nachstehenden Gleichungen an Beispiel des Ammoniaks:

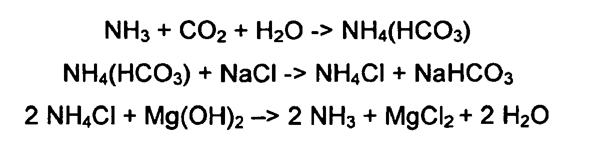

Die entstehende magnesiumchloridhaltige Lösung kann dann wie unten beschrieben weiter verwendet werden.

Durch Einleitung von Kohlendioxid in einer Suspension von Magnesiumhydroxid bildet sich durch die entstehende Kohlensäure zuerst schwer lösliches Magnesiumcarbonat, welches anschließend mit weiterer Kohlensäure zum löslichem Magnesiumhydrogencarbonat übergeht.

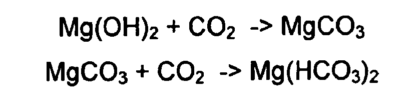

Diese Lösung wird anschließend mit einer genau abgemessenen Menge an Natriumchlorid umgesetzt. In dem so entstehenden reziproken Salzpaar fällt das übersättigte Natriumhydrogencarbonat aus.

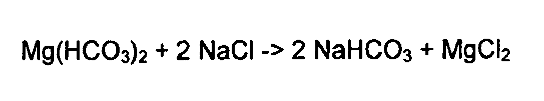

Nach dem Abtrennen des Natriumhydrogencarbonates durch z.B. Filtration enthält man eine Lösung von Magnesiumchlorid in Wasser welches sehr gut wasserlöslich ist. Beim schnellen Erhitzen mittels überhitztem Wasserdampf dieser so erhaltenen magnesiumchloridhaltigen Lösung entweicht bei Temperaturen bis zu 300°C Salzsäuregas, wobei auch das am Anfang der Reaktionskette benötigte Magnesiumhydroxid bzw. Magnesiumoxid wieder freigesetzt wird.

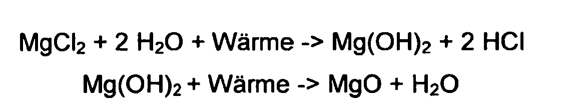

Dies wird in der Patentschrift United States Patent 3,792,153 beschrieben. Der entweichende Chlorwasserstoff kann z.B. mittels Absorption oder Destillation aufkonzentriert werden wie es unter anderen in den Patentschriften EP 0008611 A1, EP 0025427 und in der Patentschrift der DDR unter der Nummer 151143 beschrieben wird. Der so aufkonzentrierte Chlorwasserstoff kann nun mittels Sauerstoff zum elementaren Chlor (Cl₂) z.B. im Shell-Deacon-Verfahren umgewandelt werden. Eine ausführliche Beschreibung eines neueren Verfahrens erfolgt unter anderem in der Offenlegungsschrift DE 10250131 A1.

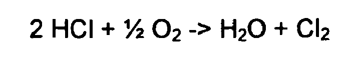

Das so entstehende Chlor kann dann an die Chlorindustrie weiterverkauft werden.

Eine weitere Möglichkeit die entstehende Salzsäure zu verwenden, ist die Oxichlorierung von Ethylen. Hierbei wird die Salzsäure, ohne dass das durch die Chlorwasserstoff-Oxidation gewonnene Chlor isoliert werden muss, direkt zur Vinylchloridsynthese und damit zur Synthese von Polyvinylchlorid PVC verwendet.

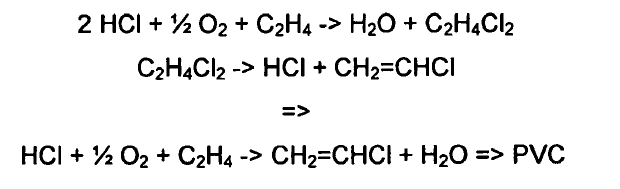

Bei diesem hier vorgestellten Verfahren wird das bei der Herstellung von Chlor aus Natriumchlorid verwendete sehr energieintensive und damit Kohlendioxid emittierende Elektrolyseverfahren vermieden.

Bei den oben beschriebenen Verfahren fallen kein chemische Substanzen an, welche aufwändig entsorgt werden müssen. Alle entstehenden Produkte können an die Großchemie verkauft werden. Teilweise brauchen chemische Produkte (z.B. Chlor) nicht erst energieintensiv (Chloralkalielektrolyse) hergestellt werden.

Zudem ist das Natriumhydrogencarbonat ein wichtiger Rohstoff für die Glas und Seifenindustrie. Weitere Vorteile der oben genannten Verfahren sind, dass keine hochgereinigten Chemikalien benötigt werden. So kann als Magnesiumsalzquelle auch preiswertes z.B. mit Sand verunreinigtes Magnesiumcarbonat bzw. Magnesiumhydroxid verwendet werden. Das gleiche gilt auch für das benötigte Kochsalz. Zudem kann das benötigte Kohlendioxid direkt und ohne aufwändige Reinigung aus dem Rauchgas verwendet werden. Auch hier ist die Wahl der Ausgangsqualität nicht von Bedeutung, da die in Wasser unlösliche Bestandteile mit dem Natriumhydrogencarbonat ausgefällt werden. Dadurch, das die Edukte (Eingangsprodukte) sehr preiswert sind, können Anreicherungen von Verunreinigungen sehr leicht durch frische Substanzen ersetzt werden.

## Patentansprüche

1. Verfahren zur Speicherung von anthropogenem Kohlendioxid, wobei Kohlendioxid als Natriumhydrogencarbonat gespeichert wird, **dadurch gekennzeichnet, dass** als Natriumquelle Natriumchlorid verwendet wird, und nach folgenden Reaktionsgleichungen umgesetzt wird
NH₄(HCO₃) + NaCl -> NH₄Cl + NaHCO₃ 2 NH₄Cl + Mg(OH)₂ → 2 NH₃ + MgCl₂ + 2 H₂O,
dass das entstehende Magnesiumchlorid thermisch zersetzt wird und dass das Chloridion aus dem so erhaltenen Magnesiumchlorid als Chlorkomponente in Chlorgas bzw. in Vinylchlorid umgesetzt wird.

2. Verfahren nach Anspruch 1, **dadurch gekennzeichnet, dass** das im Solvay-Prozess erzeugte Ammoniumchlorid oder das alternativ verwendete wasserlösliche Aminchlorid thermisch in Salzsäuregas, bzw. Salzsäure und in Ammoniak, bzw. in Salzsäuregas, bzw. Salzsäure und in das entsprechende Amin zerlegt wird.

3. Verfahren nach Anspruch 1 **dadurch gekennzeichnet, dass** das im Solvay-Prozess erzeugte Magnesiumchlorid durch thermische Zerlegung in Salzsäure und Magnesiumhydroxid bzw. Magnesiumoxid zersetzt wird.

4. Verfahren nach Anspruch 3, **dadurch gekennzeichnet, dass** die thermische Zerlegung des Magnesiumchlorids mit Hilfe von Wasserdampf erfolgt.

5. Verfahren nach einem der Ansprüche 1 bis 4, **dadurch gekennzeichnet, dass** das, gemäß den Verfahren 2 oder 3 erzeugte Salzsäuregas, mittels Oxichlorierung von Ethylen zu Venylchlorid weiterverwendet wird oder aber mittels Oxidation in Chlorgas überführt wird.

6. Verfahren nach einem der Ansprüche 1 bis 3, **dadurch gekennzeichnet, dass** das erzeugte Natriumhydogencarbonat weiterverwendet oder endgelagert wird.

## Claims

1. Process for storing anthropogenic carbon dioxide as sodium hydrogencarbonate, **characterized in that** sodium chloride is used as the sodium source and reacted according to the following chemical equations:
NH₄(HCO₃)+ NaCl → NH₄Cl + NaHCO₃
2NH₄Cl + Mg(OH)₂ → 2NH₃ + MgCl₂ + 2H₂O,
**in that** the magnesium chloride formed is decomposed thermally and **in that** the chloride ion from the magnesium chloride thus obtained is converted into the chlorine component of chlorine gas or vinyl chloride.

2. Process according to Claim 1, **characterized in that** the ammonium chloride generated in the Solvay process or the alternatively used water-soluble amine chloride is broken down thermally into hydrogen chloride gas or hydrochloric acid and ammonia, or into hydrogen chloride gas or hydrochloric acid and the corresponding amine.

3. Process according to Claim 1, **characterized in that** the magnesium chloride generated in the Solvay process is decomposed into hydrochloric acid and magnesium hydroxide or magnesium oxide by thermal breakdown.

4. Process according to Claim 3, **characterized in that** the thermal breakdown of the magnesium chloride is effected with the aid of steam.

5. Process according to any one of Claims 1 to 4, **characterized in that** the hydrogen chloride gas generated according to processes 2 or 3 is further used via oxychlorination of ethylene to form vinyl chloride or else is converted into chlorine gas by oxidation.

6. Process according to any one of claims 1 to 3, **characterized in that** the sodium hydrogencarbonate generated is sent for further use or ultimate disposal.

## Revendications

1. Procédé servant à accumuler du dioxyde de carbone anthropique, sachant que le dioxyde de carbone est accumulé sous forme d'hydrogénocarbonate de sodium, **caractérisé en ce qu'**on utilise comme source de sodium du chlorure de sodium, transformé selon les équations de réaction qui suivent
**NH₄(HCO₃) + NaCl -> NH₄Cl + NaHCO₃**
**2 NH₄Cl + Mg(OH)₂ -> 2 NH₃ + MgCl₂ + 2 H₂O,**
**en ce que** le chlorure de magnésium en résultant est dissous par voie thermique, et **en ce que** l'ion de chlorure est transformé à partir du chlorure de magnésium ainsi obtenu en tant que composant à base de chlore en gaz de chlore ou en chlorure de vinyle.

2. Procédé selon la revendication 1, **caractérisé en ce que** le chlorure d'ammonium produit lors du processus de Solvay ou le chlorure d'amine hydrosoluble utilisé en variante sont décomposés par voie thermique en gaz d'acide chlorhydrique ou en acide chlorhydrique et en ammoniaque, ou en gaz d'acide chlorhydrique ou en acide chlorhydrique et en l'amine correspondant.

3. Procédé selon la revendication 1, **caractérisé en ce que** le chlorure de magnésium produit dans le processus Solvay est dissous par décomposition thermique en acide chlorhydrique et en hydroxyde de magnésium ou en oxyde de magnésium.

4. Procédé selon la revendication 3, **caractérisé en ce que** la décomposition thermique du chlorure de magnésium a lieu à l'aide de vapeur d'eau.

5. Procédé selon l'une quelconque des revendications 1 à 4, **caractérisé en ce que** le gaz d'acide chlorhydrique produit selon le procédé 2 ou 3 est réutilisé au moyen de l'oxychloration de l'éthylène en chlorure de vinyle ou est réduit au moyen d'une oxydation en gaz de chlore.

6. Procédé selon l'une quelconque des revendications 1 à 3, **caractérisé en ce que** l'hydrogénocarbonate de sodium produit est réutilisé ou est stocké définitivement.
